# EUROPEAN PATENT SPECIFICATION

(11) **EP 3 502 902 B1**
(45) Date of publication and mention of the grant of the patent: **20.01.2021**
(21) Application number: 17209472.4
(22) Date of filing: 21.12.2017
(51) Int. Cl.: G06F 11/30, G06F 11/14, G06F 3/06, G06F 11/34

(54) **METHOD AND APPARATUS FOR MANAGING A NON-VOLATILE RANDOM-ACCESS MEMORY USING A MONITOR**
VERFAHREN UND VORRICHTUNG ZUR VERWALTUNG EINES NICHTFLÜCHTIGEN DIREKTZUGRIFFSSPEICHERS MIT EINEM MONITOR
PROCÉDÉ ET APPAREIL DE GESTION D'UNE MÉMOIRE À ACCÈS ALÉATOIRE NON VOLATILE À L' AIDE D'UN MONITEUR

(43) Date of publication of application: 26.06.2019
(73) Proprietor: Vestel Elektronik Sanayi ve Ticaret A.S., 45030 Manisa (TR)
(72) Inventor: DOGAN, Murat, 45030 Manisa (TR)
(74) Representative: Flint, Adam

(56) References cited:
- EP-A1- 2 228 722
- EP-A1- 3 037 951
- US-A1- 2017 147 208
- US-B1- 9 122 588

## Description

### Technical Field

The present disclosure relates to a method and apparatus for managing a non-volatile random-access memory, NVRAM, using a NVRAM monitor.

### Background

Non-volatile random-access memory (NVRAM) based client applications use fixed-size data files as their database and treat them as physical memory units. There are usually multiple NVRAM client applications and each application can have multiple data files that are to be stored in the NVRAM. The data files are usually assigned unique client identifiers and client keys. A client application can then use its own unique client identifier and client key to read a specific data file from the NVRAM or write a data file to the NVRAM

Previous NVRAM systems read the contents of a data file and create a copy in volatile memory (e.g. RAM). The system then parses and process the data file on start-up in order to be ready for any read and write requests received from client applications. If a client application makes a read request using its client identifier and a client key, the requested data block is read and returned directly from an NVRAM cache without accessing the physical file. On the other hand, if the client application makes a write request using its client identifier and a client key, the NVRAM first updates its cache and then writes the requested data file directly to the physical file.

US2017/0147208A1 discloses a method for constructing an NVRAM-based file system. The file system determines a file operation type and if the file operation type is a non-persistent file write operation, content of the non-persistent file write operation is written to a dynamic random access memory. The content is then flushed back to a non-volatile random access memory.

### Summary

According to a first aspect disclosed herein, there is provided a method of managing a non-volatile random-access memory, NVRAM, using an NVRAM monitor, the method comprising: the NVRAM accessing a stored file from a non-volatile memory via the NVRAM monitor and saving a copy of the file in a memory of the NVRAM, the NVRAM monitor retaining a copy of the file in a memory of the NVRAM monitor; the NVRAM receiving a write request to modify the file and updating the copy of the file in the memory of the NVRAM based on the write request received by the NVRAM; the NVRAM sending a copy of the updated file to the NVRAM monitor and the NVRAM monitor saving a copy of the updated file in the memory of the NVRAM monitor; and the NVRAM monitor saving the updated file in the non-volatile memory.

In an example, the NVRAM accesses the stored file from non-volatile memory via the NVRAM monitor on start-up of the NVRAM.

In an example, the memory of the NVRAM and/or the memory of the NVRAM monitor is volatile memory.

In an example, the method comprises: the NVRAM monitor saving the updated file in the non-volatile memory in response to at least one trigger condition being satisfied.

In an example, the method comprising: the NVRAM monitor recording a time at which a previous write request was received at the NVRAM, wherein the at least one trigger condition to be satisfied comprises a period of time since a previous write request was received at the NVRAM.

In an example, the method comprises: the NVRAM monitor postponing the saving of the updated file in the non-volatile memory if the non-volatile memory is busy with a previous read or write request, and the trigger condition to be satisfied is a busy state of the non-volatile memory such that the NVRAM monitor saves the updated file in the non-volatile memory in response to the non-volatile memory no longer being busy with a previous read or write request.

In an example, the method comprises: the NVRAM monitor periodically checking to see if the at least one trigger condition has been satisfied and saving the updated file in the non-volatile memory if the at least one trigger condition has been satisfied.

In an example, the method comprises: the NVRAM monitor postponing the saving of the updated file in the non-volatile memory and saving a copy of a second updated file in the memory of the NVRAM monitor such that both the updated file and second updated file are saved in the memory of the NVRAM monitor in sequence in a batch; and the NVRAM monitor saving both the updated file and the second updated file in the non-volatile memory in response to the at least one trigger condition being satisfied.

In an example, the method comprises: the NVRAM monitor saving to a write list information associated with a write request to modify a file, wherein the write list enables the NVRAM monitor to track which updated files need to be saved in the non-volatile memory.

In an example, the method comprises: the NVRAM monitor clearing the write list after saving all updated files to the non-volatile memory.

In an example, the method comprises: the NVRAM monitor obtaining a value of a cyclic redundancy check, CRC, performed on a file formed of all files saved in the memory of the NVRAM and appending the value of the CRC to the file formed of all files saved in the memory of the NVRAM monitor.

According to a second aspect disclosed herein, there is provided a computer program comprising instructions such that when the computer program is executed on a computing device, the computing device is arranged to carry out a method according to any method described above.

According to a third aspect disclosed herein, there is provided an apparatus, the apparatus comprising: a non-volatile random-access memory, NVRAM, having access to a non-volatile memory; and an NVRAM monitor, the NVRAM being configured to access a stored file from the non-volatile memory via the NVRAM monitor and save a copy of the file in a memory of the NVRAM, the NVRAM monitor being configured to retain a copy of the file in a memory of the NVRAM monitor, the NVRAM being configured to update the copy of the file in the memory of the NVRAM based on a write request received by the NVRAM, the NVRAM being configured to send a copy of the updated file to the NVRAM monitor and the NVRAM monitor being configured to save a copy of the updated file in the memory of the NVRAM monitor, and the NVRAM monitor being configured to save the updated file in the non-volatile memory.

In an example, the NVRAM monitor is configured to save the updated file in the non-volatile memory in response to at least one trigger condition being satisfied.

In an example, the NVRAM monitor is configured to save to a write list information associated with a write request to modify a file, wherein the write list enables the NVRAM monitor to track which updated files need to be saved in the non-volatile memory.

### Brief Description of the Drawings

To assist understanding of the present disclosure and to show how embodiments may be put into effect, reference is made by way of example to the accompanying drawing in which:

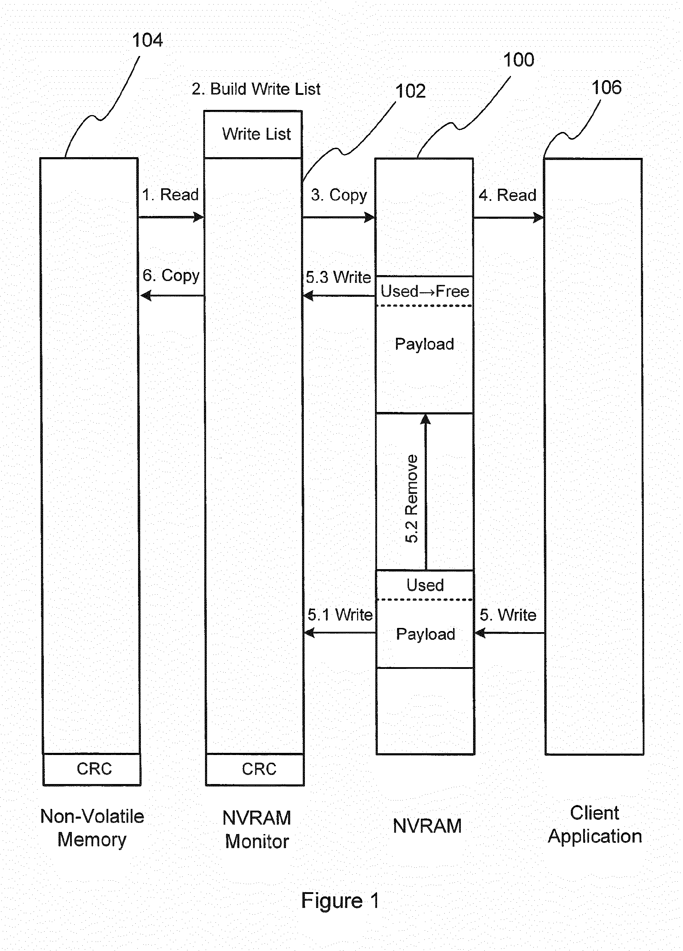

Figure 1 shows schematically an example flow diagram of a method of managing a non-volatile random-access memory, NVRAM, using an NVRAM monitor.

### Detailed Description

In prior non-volatile random-access memory (NVRAM) systems, such as flash memory systems, the NVRAM reads the contents of a data file and creates a copy in volatile memory. The system then parses and process the data file on start-up in order to be ready for any read and write requests received from client applications. When a client application makes a write request to modify a file, the NVRAM first updates its cache and then writes the requested data block directly to the physical file.

This process of the previous systems presents a problem with overall system performance. In particular, the overall system performance may be negatively affected because read and write operations can block each other. If a client application gains access to the NVRAM and starts updating its data files sequentially, all other client applications must wait for the completion of that update operation, which makes them unable to perform their own reads and writes efficiently and in a timely manner. Along with many more critical stability issues, the most harmless consequence of this sequential access is that user inputs like keyboard, mouse or remote control commands are buffered for some time, perhaps as much as several seconds, which impacts on a user's experience as the user is forced to wait before commands are processed. This problem is particularly noticeable in low speed serial peripheral interface (SPI) flash memory, where serial interface speed is most often never fast enough to keep up with the central processing unit (CPU) speed.

In addition, a second problem with prior systems is that each client application is responsible for the integrity of its own data files and may apply some recovery mechanism when their write operations are interrupted, e.g. after a power outage. The most common recovery technique is to append a cyclic redundancy check (CRC) of each data file to the end of each respective file before writing the files to NVRAM. The client applications can then recalculate the CRC of their data files, compare them with the values read from NVRAM for corruption detection, and launch a specific recovery processes if a corruption is detected. This technique ensures the integrity of a single data file but not the overall data integrity. In a system with multiple NVRAM client applications, if multiple applications need to update their data files sequentially upon a specific event, and if a power outage occurs before all of the client applications have could update their data files, their data files would remain outdated when the system reboots.

In examples described herein, a non-volatile random-access memory monitor (an NVRAM monitor) is used as an intermediary between the NVRAM and the physical file, thus preventing the NVRAM from writing data files directly to the physical file. The NVRAM monitor may also be used to keep track of all write operations and to copy written files to the physical file periodically only when specified conditions are met.

Figure 1 illustrates a flow diagram of an example of a method for managing an NVRAM 100, using an NVRAM monitor 102 operatively coupled to the NVRAM 100. The NVRAM 100 is a memory unit that saves its stored data regardless of whether the power supplied to the memory is on or off. The NVRAM 100 can be, for example, flash memory, but may alternatively be electrically erasable programmable read-only memory (EEPROM), ferroelectric RAM, magneto-resistive RAM, phase-change RAM, etc. The NVRAM monitor 102 and NVRAM 100 are each operatively coupled to at least one non-volatile memory 104. The non-volatile memory 104 may be, for example, a mechanically or electrically addressed data storage unit that has the capability to hold saved data even if the power is turned off.

The NVRAM 100 and NVRAM monitor 102 each have their own memory. The NVRAM memory and the NVRAM monitor memory may be volatile memory that requires power to maintain stored information: it retains its contents while powered on but when the power is interrupted, the stored data is lost.

The NVRAM 100 is also operatively coupled to at least one client application 106. The client application 106 may be, for example, an application used to make calls on a user device. The NVRAM 100, NVRAM monitor 102, non-volatile memory 104 and the client application(s) are all located on or associated with a device. The device may be for example a television set, a PVR (personal video recorder), a DVD player, Blu Ray player, a set-top box, a desktop or laptop or tablet computer, etc., a video game console, a cellular phone (including a so-called "smart phone"), a printer, an electric appliance such as a "white goods" item such as a washing machine, a tumble dryer, a combined washing machine and tumble dryer, a dishwasher, a refrigeration apparatus such as a fridge or freezer or combined fridge-freezer, etc., etc.

As shown in Figure 1, at Step 1, the NVRAM 100 reads a copy of a file from non-volatile memory 104 (also referred to herein as a "physical file") through the NVRAM monitor. That is, the NVRAM 100 may read the file from the NVRAM monitor's memory. The NVRAM monitor 102 retains a copy of the file in its own memory.

Step 2 is an optional step which will be discussed below.

At Step 3, the NVRAM 100 saves or creates a copy of the file (received from the NVRAM monitor 102) in its own (volatile) memory, which acts as a cache that is quickly accessible for read and write requests. That is, the NVRAM 100 does not itself directly access the non-volatile memory 104; instead, the NVRAM monitor 102 acts as an added layer between the NVRAM 100 and the non-volatile memory 104.

At Step 4, a client application 106 issues a read request to the NVRAM 100 using a client identifier and a client key. The client identifier identifies the specific client application 106 to the NVRAM 100. The client key authorises the client application 106 to view/modify a file. The requested data file is read and returned directly from the NVRAM memory without any access to the non-volatile memory 104.

At Step 5, a write request is received at the NVRAM 100 from a client application 106. The write request is a request made by a client application 106 to modify a file stored in the non-volatile memory 104. The write request may include the client identifier and/or the client key. The NVRAM 100 updates its copy of the file saved in the NVRAM memory based on the received write request.

At Step 5.1, the NVRAM 100 sends a copy of the updated file saved in the NVRAM's memory to the NVRAM monitor 102 which in turn saves the updated file in the (volatile) memory of the NVRAM monitor 102. That is, both the NVRAM 100 and the NVRAM monitor 102 have a copy of the updated file saved in (volatile) memory.

Then, at Step 6, the NVRAM monitor 102 saves the updated file in the non-volatile memory 104, i.e. the physical file.

An advantage of this process is that the NVRAM 100 does not itself directly access the non-volatile memory 104 during the file write operation (i.e. when the updated file is saved in the non-volatile memory 104). The NVRAM 100 is therefore free to carry out other processes such as, for example, receiving and processing read/write requests from other client applications 106. Moreover, the NVRAM monitor 102 can have oversight of writing of updated files to the non-volatile memory 104, i.e. the physical file, which can lead to further efficiencies and avoid bottlenecks, as will be discussed further below.

As an option, Step 1 (the NVRAM 100 reading a copy of the file from non-volatile memory 104 through the NVRAM monitor) can take place upon start-up of the NVRAM 100. An advantage of this is that the NVRAM 100 is ready to receive read and write requests from client applications straight away, using its own fast non-volatile memory cache, thereby minimising any delay between the issuing and processing of client requests.

In some examples, the NVRAM monitor 102 delays saving the updated file in the non-volatile memory 104 until certain conditions are met. The NVRAM monitor 102 may periodically check to see whether the conditions have been met before saving the updated file in the non-volatile memory 104. For example, the NVRAM monitor 102 may continuously check every say thirty seconds to see if the conditions have been met. In another example, the NVRAM monitor 102 may check to see if the conditions have been met after a predetermined number of received read or write requests. That is, the NVRAM monitor 102 may check after it has received at least say five requests. The time period or number of requests before a check is made may be more or less than thirty seconds and five requests respectively. An advantage of this is that the actual file write operation for the updated file to the physical file in the non-volatile memory 104 can be postponed until a later point, allowing the system to continue processing or to start processing a different (e.g. a more important) procedure.

As an optional feature, when a write request is received at the NVRAM 100, the NVRAM monitor 102 may record the time at which it was received. The NVRAM monitor 102 may then wait until a predetermined amount of time has passed since the time of the last received write request before saving the updated file in the non-volatile memory 104. An advantage of this is that it prevents unnecessary access to the non-volatile memory 104 during sequential file write operations.

As another optional feature, if the non-volatile memory 104 is busy processing a previous read or write request, the NVRAM monitor 102 may delay saving the updated file in the non-volatile memory 104 until the non-volatile memory 104 is no longer busy. Therefore the NVRAM monitor 102 may periodically check to see whether the non-volatile memory 104 is engaged with a read/write request. An advantage of this is that it minimises the risk of the updated file being incorrectly saved or not saved at all due to the non-volatile memory 104 being busy with a different process, and avoids the delays of prior art systems that can occur when a client application would like to access the non-volatile memory 104 to read a file, but the non-volatile memory 104 is busy writing or updating another file.

In some examples, the NVRAM monitor 102 may save more than one file in its (volatile) memory. That is, the NVRAM 100 may receive a second write request to modify a file. The NVRAM 100 may then send a copy of the updated file to the NVRAM monitor 102 to save in the memory of the NVRAM monitor 102. Instead of saving the updated files in the non-volatile memory 104 one at a time, the NVRAM monitor 102 may wait until there are multiple updated files in its memory and then save the multiple updated files in the non-volatile memory 104 as a single batch (i.e. in sequence). An advantage of this is that the NVRAM monitor 102 may save several updated files in the non-volatile memory 104 when it knows that the non-volatile memory 104 is not busy, thus reducing the likelihood of attempting to save an updated file in the future when the non-volatile memory 104 is instead busy.

Returning to Step 2, the NVRAM monitor 102 may build a write list to keep track of write operations that will need to be carried out to save updated files in the non-volatile memory 104. When the NVRAM monitor 102 receives a copy of an updated file from the NVRAM 100 and saves the copy in its memory, the NVRAM monitor 102 may also record a corresponding write request, or information associated with the write request, in the write list. An advantage of this is that the write list enables the NVRAM monitor 102 to track which updated files need to be saved in the non-volatile memory 104. This is particularly useful when multiple files, saved in the memory of the NVRAM monitor 102, require saving in non-volatile memory 104. The NVRAM 100 may clear the write list after saving all of the updated files to non-volatile memory 104 to indicate there is no pending write operations.

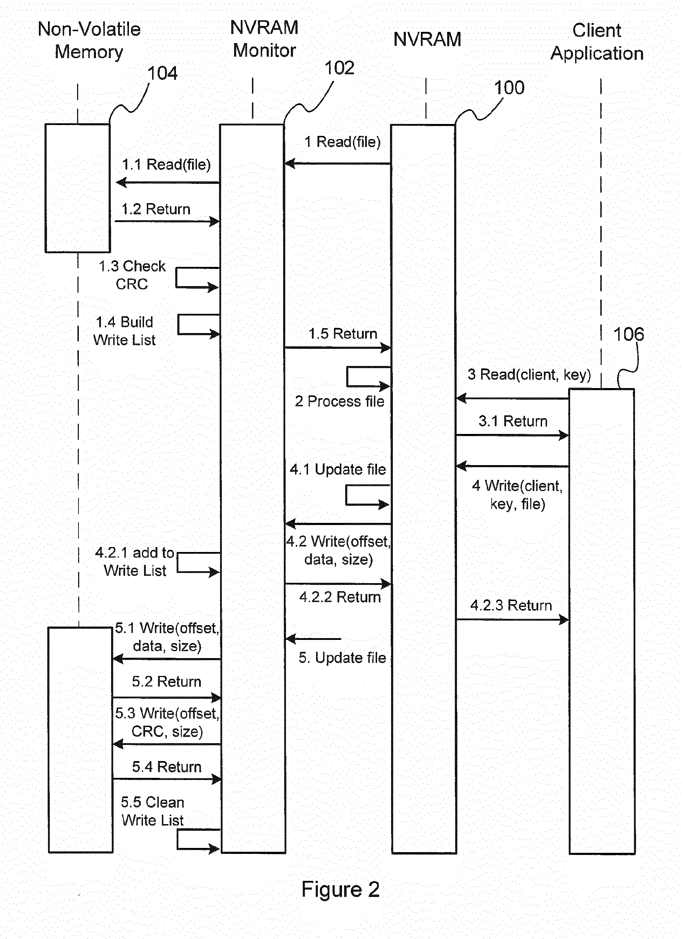

Referring now to Figure 2, this shows a more detailed example of a method as described herein. A number of the steps are similar to or the same as steps described above with reference to Figure 1 and not all details will be repeated here.

At Step 1, the NVRAM requests access to a file from the NVRAM monitor. This may occur on start-up of the NVRAM. In response, at Step 1.1, the NVRAM monitor accesses the file from the non-volatile memory, which is then returned to the NVRAM monitor in Step 1.2. At Step 1.3, the NVRAM monitor can perform a cyclic redundancy check (CRC) on the whole of the non-volatile memory to check the integrity of the entire file saved in the non-volatile memory. The NVRAM monitor can perform any necessary recovery processes, based on the CRC check, to ensure the data integrity of the whole non-volatile memory. At Step 1.4, the NVRAM monitor can create the write list described above to keep track of any updated files that it will need to save to non-volatile memory at a later point in time. At Step 1.5, the NVRAM receives the file.

At Step 2, the NVRAM saves a copy of the received file in a memory of the NVRAM. The NVRAM parses and processes the file to be ready to receive read and write requests.

At Step 3, a client application makes a read request to the NVRAM to read the file (a copy of which has been saved at the NVRAM). A copy of the file is sent to the client application at Step 3.1. In some examples, the file may only be sent to the client application if the read request is accompanied by a valid client identifier and client key.

At Step 4, the client application makes a write request to the NVRAM to modify the file. In some examples, the write request is sent with the client key and client identifier. At Step 4.1, the NVRAM updates the copy of the file that is saved in the memory of the NVRAM based on the received write request. At Step 4.2, the NVRAM sends a copy of the updated file to the NVRAM monitor. The NVRAM monitor updates the copy of the file in its own memory. At Step 4.2.1, the NVRAM monitor adds information to the write list created in Step 1.4. The information added to the write list allows the NVRAM monitor to keep track of the updated files that need saving in the non-volatile memory.

At Step 5, the NVRAM monitor receives a notification to write any updated files saved in the memory of the NVRAM monitor to the non-volatile memory. At Step 5.1, the updated files are saved to the non-volatile memory. At Step 5.3, the NVRAM monitor calculates a CRC of a file made up of all of the files saved in the NVRAM memory and appends this to the file saved in the non-volatile memory. At Step 5.5, the NVRAM monitor clears the write list to indicate that there are no more updated files to be saved to the non-volatile memory.

In some cases, the write list created by the NVRAM monitor 102 in Step 1.4 may have a Boolean array of size N to represent the N fixed-size data files saved in its memory (e.g. in a volatile cache). (By way of example only, the fixed-size data files may each be 8KB.) An advantage of this is that the array may be used to mark a respective data file as modified when a client application 106 modifies that data file. The NVRAM 100 may also use the array to record the offset and the size of all write requests. An advantage of this is that only as much data will be written to the non-volatile memory 104 as was requested by the NVRAM 100.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A method of managing a non-volatile random-access memory, NVRAM (100), using an NVRAM monitor (102), the method comprising:
the NVRAM (100) accessing a stored file from a non-volatile memory (104) via the NVRAM monitor (102) and saving a copy of the file in a memory of the NVRAM (100), the NVRAM monitor (102) retaining a copy of the file in a memory of the NVRAM monitor (102);
the NVRAM (100) receiving a write request to modify the file and updating the copy of the file in the memory of the NVRAM based on the write request received by the NVRAM (100);
the NVRAM (100) sending a copy of the updated file to the NVRAM monitor (102) and the NVRAM monitor (102) saving a copy of the updated file in the memory of the NVRAM monitor (102); and
the NVRAM monitor (102) saving the updated file in the non-volatile memory (104).

2. A method according to claim 1, wherein the NVRAM (100) accesses the stored file from non-volatile memory (104) via the NVRAM monitor (102) on start-up of the NVRAM (100).

3. A method according to claim 1 or claim 2, wherein the memory of the NVRAM (100) and/or the memory of the NVRAM monitor (102) is volatile memory.

4. A method according to any of claims 1 to 3, the method comprising:
the NVRAM monitor (102) saving the updated file in the non-volatile memory (104) in response to at least one trigger condition being satisfied.

5. A method according to claim 4, the method comprising:
the NVRAM monitor (102) recording a time at which a previous write request was received at the NVRAM (100), wherein the at least one trigger condition to be satisfied comprises a period of time since a previous write request was received at the NVRAM (100).

6. A method according to claim 4 or claim 5, the method comprising:
the NVRAM monitor (102) postponing the saving of the updated file in the non-volatile memory (104) if the non-volatile memory (104) is busy with a previous read or write request, and the trigger condition to be satisfied is a busy state of the non-volatile memory (104) such that the NVRAM monitor (102) saves the updated file in the non-volatile memory (104) in response to the non-volatile memory (104) no longer being busy with a previous read or write request.

7. A method according to any of claims 4 to 6, the method comprising:
the NVRAM monitor (102) periodically checking to see if the at least one trigger condition has been satisfied and saving the updated file in the non-volatile memory (104) if the at least one trigger condition has been satisfied.

8. A method according to claim 4 to 7, the method comprising:
the NVRAM monitor (102) postponing the saving of the updated file in the non-volatile memory (104) and saving a copy of a second updated file in the memory of the NVRAM monitor (102) such that both the updated file and second updated file are saved in the memory of the NVRAM monitor (102) in sequence in a batch; and
the NVRAM monitor (102) saving both the updated file and the second updated file in the non-volatile memory (104) in response to the at least one trigger condition being satisfied.

9. A method according to any of claims 1 to 8, the method comprising:
the NVRAM monitor (102) saving to a write list information associated with a write request to modify a file, wherein the write list enables the NVRAM monitor (102) to track which updated files need to be saved in the non-volatile memory (104).

10. A method according claim 9, the method comprising:
the NVRAM monitor (102) clearing the write list after saving all updated files to the non-volatile memory (104).

11. A method according to any of claims 1 to 10, the method comprising:
the NVRAM monitor (102) obtaining a value of a cyclic redundancy check, CRC, performed on a file formed of all files saved in the memory of the NVRAM (100) and appending the value of the CRC to the file formed of all files saved in the memory of the NVRAM monitor (102).

12. A computer program comprising instructions such that when the computer program is executed on a computing device, the computing device is arranged to carry out a method according to any of claims 1 to 11.

13. An apparatus, the apparatus comprising:
a non-volatile random-access memory, NVRAM (100), having access to a non-volatile memory (104); and
an NVRAM monitor (102),
the NVRAM (100) being configured to access a stored file from the non-volatile memory (104) via the NVRAM monitor (102) and save a copy of the file in a memory of the NVRAM (100), the NVRAM monitor (102) being configured to retain a copy of the file in a memory of the NVRAM monitor,
the NVRAM (100) being configured to update the copy of the file in the memory of the NVRAM (100) based on a write request received by the NVRAM (100),
the NVRAM (100) being configured to send a copy of the updated file to the NVRAM monitor (102) and the NVRAM monitor (102) being configured to save a copy of the updated file in the memory of the NVRAM monitor, and
the NVRAM monitor (102) being configured to save the updated file in the non-volatile memory (104).

14. An apparatus according to claim 13, the NVRAM monitor (102) being configured to save the updated file in the non-volatile memory (104) in response to at least one trigger condition being satisfied.

15. An apparatus according to claim 13 or claim 14, the NVRAM monitor (102) being configured to save to a write list information associated with a write request to modify a file, wherein the write list enables the NVRAM monitor (102) to track which updated files need to be saved in the non-volatile memory (104).

## Patentansprüche

1. Verfahren zum Verwalten eines nichtflüchtigen Direktzugriffsspeichers, NVRAM (100), unter Verwendung eines NVRAM-Monitors (102), wobei das Verfahren aufweist:
der NVRAM (100) greift über den NVRAM-Monitor (102) auf eine gespeicherte Datei aus einem nichtflüchtigen Speicher (104) zu und speichert eine Kopie der Datei in einem Speicher des NVRAM (100), wobei der NVRAM-Monitor (102) eine Kopie der Datei in einem Speicher des NVRAM-Monitors (102) behält;
der NVRAM (100) empfängt eine Schreibanforderung zum Ändern der Datei und aktualisiert die Kopie der Datei im Speicher des NVRAM basierend auf der vom NVRAM (100) empfangenen Schreibanforderung;
der NVRAM (100) sendet eine Kopie der aktualisierten Datei an den NVRAM-Monitor (102) und der NVRAM-Monitor (102) speichert eine Kopie der aktualisierten Datei im Speicher des NVRAM-Monitors (102); und
der NVRAM-Monitor (102) speichert die aktualisierte Datei im nichtflüchtigen Speicher (104).

2. Verfahren nach Anspruch 1, bei welchem der NVRAM (100) beim Anlaufen des NVRAM (100) über den NVRAM-Monitor (102) auf die gespeicherte Datei aus dem nichtflüchtigen Speicher (104) zugreift.

3. Verfahren nach Anspruch 1 oder Anspruch 2, bei welchem der Speicher des NVRAM (100) und/oder der Speicher des NVRAM-Monitors (102) ein flüchtiger Speicher ist.

4. Verfahren nach einem der Ansprüche 1 bis 3, bei welchem das Verfahren aufweist:
der NVRAM-Monitor (102) speichert die aktualisierte Datei im nichtflüchtigen Speicher (104) als Reaktion darauf, dass wenigstens eine Triggerbedingung erfüllt ist.

5. Verfahren nach Anspruch 4, bei welchem das Verfahren aufweist:
der NVRAM-Monitor (102) zeichnet einen Zeitpunkt auf, zu dem eine vorherige Schreibanforderung am NVRAM (100) empfangen wurde, wobei die wenigstens eine zu erfüllende Triggerbedingung eine Zeitdauer aufweist, seitdem eine vorherige Schreibanforderung am NVRAM (100) empfangen wurde.

6. Verfahren nach Anspruch 4 oder Anspruch 5, wobei das Verfahren aufweist:
der NVRAM-Monitor (102) stellt das Speichern der aktualisierten Datei im nichtflüchtigen Speicher (104) zurück, wenn der nichtflüchtige Speicher (104) mit einer vorherigen Lese- oder Schreibanforderung beschäftigt ist und die zu erfüllende Triggerbedingung ein Beschäftigungszustand des nichtflüchtigen Speichers (104) ist, sodass der NVRAM-Monitor (102) die aktualisierte Datei im nichtflüchtigen Speicher (104) als Reaktion darauf speichert, dass der nichtflüchtige Speicher (104) nicht mehr mit einer vorherigen Lese- oder Schreibanforderung beschäftigt ist.

7. Verfahren nach einem der Ansprüche 4 bis 6, bei welchem das Verfahren aufweist:
der NVRAM-Monitor (102) prüft regelmäßig, ob die wenigstens eine Triggerbedingung erfüllt worden ist, und speichert die aktualisierte Datei im nichtflüchtigen Speicher (104), wenn die wenigstens eine Triggerbedingung erfüllt worden ist.

8. Verfahren nach einem der Ansprüche 4 bis 7, bei welchem das Verfahren aufweist:
der NVRAM-Monitor (102) stellt das Speichern der aktualisierten Datei im nichtflüchtigen Speicher (104) und das Speichern einer Kopie einer zweiten aktualisierten Datei im Speicher des NVRAM-Monitors (102) zurück, sodass sowohl die aktualisierte Datei als auch die zweite aktualisierte Datei nacheinander in einem Batch im Speicher des NVRAM-Monitors (102) gespeichert werden; und
der NVRAM-Monitor (102) speichert sowohl die aktualisierte Datei als auch die zweite aktualisierte Datei im nichtflüchtigen Speicher (104) als Reaktion darauf, dass die wenigstens eine Triggerbedingung erfüllt ist.

9. Verfahren nach einem der Ansprüche 1 bis 8, bei welchem das Verfahren aufweist:
der NVRAM-Monitor (102) speichert eine Schreiblisteninformation in Verbindung mit einer Schreibanforderung zum Ändern einer Datei, wobei die Schreibliste den NVRAM-Monitor (102) verfolgen lässt, welche aktualisierten Dateien im nichtflüchtigen Speicher (104) gespeichert werden müssen.

10. Verfahren nach Anspruch 9, bei welchem das Verfahren aufweist:
der NVRAM-Monitor (102) löscht die Schreibliste nach dem Speichern aller aktualisierten Dateien in den nichtflüchtigen Speicher (104).

11. Verfahren nach einem der Ansprüche 1 bis 10, bei welchem das Verfahren aufweist:
der NVRAM-Monitor (102) erhält einen Wert einer zyklischen Redundanzprüfung, CRC, die an einer Datei durchgeführt wird, die aus allen im Speicher des NVRAM (100) gespeicherten Dateien gebildet ist, und hängt den Wert der CRC an die Datei an, die aus allen im Speicher des NVRAM-Monitors (102) gespeicherten Dateien gebildet ist.

12. Computerprogramm mit Anweisungen derart, dass, wenn das Computerprogramm auf einem Computergerät ausgeführt wird, das Computergerät eingerichtet ist, um ein Verfahren nach einem der Ansprüche 1 bis 11 auszuführen.

13. Vorrichtung, wobei die Vorrichtung aufweist:
einen nichtflüchtigen Direktzugriffsspeicher, NVRAM (100) mit einem Zugriff auf einen nichtflüchtigen Speicher (104); und
einen NVRAM-Monitor (102),
wobei der NVRAM (100) konfiguriert ist, um über den NVRAM-Monitor (102) auf eine gespeicherte Datei aus dem nichtflüchtigen Speicher (104) zuzugreifen und eine Kopie der Datei in einem Speicher des NVRAM (100) zu speichern, wobei der NVRAM-Monitor (102) konfiguriert ist, um eine Kopie der Datei in einem Speicher des NVRAM-Monitors zu behalten,
wobei der NVRAM (100) konfiguriert ist, um die Kopie der Datei im Speicher des NVRAM (100) basierend auf einer vom NVRAM (100) empfangenen Schreibanforderung zu aktualisieren,
wobei der NVRAM (100) konfiguriert ist, um eine Kopie der aktualisierten Datei an den NVRAM-Monitor (102) zu senden, und der NVRAM-Monitor (102) konfiguriert ist, um eine Kopie der aktualisierten Datei im Speicher des NVRAM-Monitors (102) zu speichern, und
wobei der NVRAM-Monitor (102) konfiguriert ist, um die aktualisierte Datei im nichtflüchtigen Speicher (104) zu speichern.

14. Vorrichtung nach Anspruch 13, bei welcher der NVRAM-Monitor (102) konfiguriert ist, um die aktualisierte Datei im nichtflüchtigen Speicher (104) als Reaktion darauf zu speichern, dass wenigstens eine Triggerbedingung erfüllt ist.

15. Vorrichtung nach Anspruch 13 oder Anspruch 14, bei welcher der NVRAM-Monitor (102) konfiguriert ist, um eine Schreiblisteninformation in Verbindung mit einer Schreibanforderung zum Ändern einer Datei zu speichern, wobei die Schreibliste den NVRAM-Monitor (102) verfolgen lässt, welche aktualisierten Dateien im nichtflüchtigen Speicher (104) gespeichert werden müssen.

## Revendications

1. Procédé de gestion d'une mémoire vive non volatile (NVRAM) (100) utilisant un moniteur NVRAM (102), le procédé comprenant :
la NVRAM (100) accédant à un fichier stocké à partir d'une mémoire non volatile (104) via le moniteur NVRAM (102), et sauvegardant une copie du fichier dans une mémoire de la NVRAM (100), le moniteur NVRAM (102) conservant une copie du fichier dans une mémoire du moniteur NVRAM (102) ;
la NVRAM (100) recevant une demande d'écriture pour modifier le fichier, et mettant à jour la copie du fichier dans la mémoire de la NVRAM sur la base de la demande d'écriture reçue par la NVRAM (100) ;
la NVRAM (100) envoyant une copie du fichier mis à jour au moniteur NVRAM (102), et le moniteur NVRAM (102) sauvegardant une copie du fichier mis à jour dans la mémoire du moniteur NVRAM (102) ; et
le moniteur NVRAM (102) sauvegardant le fichier mis à jour dans la mémoire non volatile (104).

2. Procédé selon la revendication 1, dans lequel la NVRAM (100) accède au fichier stocké à partir de la mémoire non volatile (104) via le moniteur NVRAM (102) au démarrage de la NVRAM (100).

3. Procédé selon la revendication 1 ou 2, dans lequel la mémoire de la NVRAM (100) et / ou la mémoire du moniteur NVRAM (102) est une mémoire volatile.

4. Procédé selon l'une quelconque des revendications 1 à 3, le procédé comprenant :
le moniteur NVRAM (102) sauvegardant le fichier mis à jour dans la mémoire non volatile (104) en réponse à au moins une condition de déclenchement qui est satisfaite.

5. Procédé selon la revendication 4, le procédé comprenant :
le moniteur NVRAM (102) enregistrant une heure à laquelle une demande d'écriture précédente a été reçue au niveau de la NVRAM (100), dans lequel ladite au moins une condition de déclenchement à satisfaire comprend une période de temps depuis qu'une demande d'écriture précédente a été reçue au niveau de la NVRAM (100).

6. Procédé selon la revendication 4 ou 5, le procédé comprenant :
le moniteur NVRAM (102) reportant la sauvegarde du fichier mis à jour dans la mémoire non volatile (104) si la mémoire non volatile (104) est occupée par une précédente demande de lecture ou d'écriture, et la condition de déclenchement à satisfaire étant un état occupé de la mémoire non volatile (104) de telle sorte que le moniteur NVRAM (102) sauvegarde le fichier mis à jour dans la mémoire non volatile (104) en réponse au fait que la mémoire non volatile (104) n'est plus occupée par une précédente demande de lecture ou d'écriture.

7. Procédé selon l'une quelconque des revendications 4 à 6, le procédé comprenant :
le moniteur NVRAM (102) vérifiant périodiquement pour voir si ladite au moins une condition de déclenchement a été satisfaite, et sauvegardant le fichier mis à jour dans la mémoire non volatile (104) si ladite au moins une condition de déclenchement a été satisfaite.

8. Procédé selon les revendications 4 à 7, le procédé comprenant :
le moniteur NVRAM (102) reportant la sauvegarde du fichier mis à jour dans la mémoire non volatile (104), et sauvegardant une copie d'un deuxième fichier mis à jour dans la mémoire du moniteur NVRAM (102) de telle sorte qu'à la fois le fichier mis à jour et le deuxième fichier mis à jour sont sauvegardés dans la mémoire du moniteur NVRAM (102) en séquence dans un lot ; et
le moniteur NVRAM (102) sauvegardant à la fois le fichier mis à jour et le deuxième fichier mis à jour dans la mémoire non volatile (104) en réponse à ladite au moins une condition de déclenchement qui est satisfaite.

9. Procédé selon l'une quelconque des revendications 1 à 8, le procédé comprenant :
le moniteur NVRAM (102) sauvegardant dans une liste d'écriture, une information associée à une demande d'écriture pour modifier un fichier, dans lequel la liste d'écriture permet au moniteur NVRAM (102) de suivre lesquels des fichiers mis à jour nécessitent d'être sauvegardés dans la mémoire non volatile (104).

10. Procédé selon la revendication 9, le procédé comprenant :
le moniteur NVRAM (102) effaçant la liste d'écriture après avoir sauvegardé tous les fichiers mis à jour dans la mémoire non volatile (104).

11. Procédé selon l'une quelconque des revendications 1 à 10, le procédé comprenant :
le moniteur NVRAM (102) obtenant une valeur d'un contrôle de redondance cyclique (CRC) effectué sur un fichier formé de tous les fichiers sauvegardés dans la mémoire de la NVRAM (100), et ajoutant la valeur du CRC au fichier formé de tous les fichiers sauvegardés dans la mémoire du moniteur NVRAM (102).

12. Programme informatique comprenant des instructions de telle sorte que, lorsque le programme informatique est exécuté sur un dispositif informatique, le dispositif informatique est agencé de manière à effectuer un procédé selon l'une quelconque des revendications 1 à 11.

13. Appareil, l'appareil comprenant :
une mémoire vive non volatile (NVRAM) (100) ayant accès à une mémoire non volatile (104) ; et
un moniteur NVRAM (102),
la NVRAM (100) étant configurée pour accéder à un fichier stocké à partir de la mémoire non volatile (104) via le moniteur NVRAM (102), et configurée pour sauvegarder une copie du fichier dans une mémoire de la NVRAM (100), le moniteur NVRAM (102) étant configuré pour conserver une copie du fichier dans une mémoire du moniteur NVRAM,
la NVRAM (100) étant configurée pour mettre à jour la copie du fichier dans la mémoire de la NVRAM (100) sur la base d'une demande d'écriture reçue par la NVRAM (100),
la NVRAM (100) étant configurée pour envoyer une copie du fichier mis à jour au moniteur NVRAM (102), et le moniteur NVRAM (102) étant configuré pour sauvegarder une copie du fichier mis à jour dans la mémoire du moniteur NVRAM, et
le moniteur NVRAM (102) étant configuré pour sauvegarder le fichier mis à jour dans la mémoire non volatile (104).

14. Appareil selon la revendication 13, le moniteur NVRAM (102) étant configuré pour sauvegarder le fichier mis à jour dans la mémoire non volatile (104) en réponse à au moins une condition de déclenchement qui est satisfaite.

15. Appareil selon la revendication 13 ou 14, le moniteur NVRAM (102) étant configuré pour sauvegarder dans une liste d'écriture, une information associée à une demande d'écriture pour modifier un fichier, dans lequel la liste d'écriture permet au moniteur NVRAM (102) de suivre lesquels des fichiers mis à jour nécessitent d'être sauvegardés dans la mémoire non volatile (104).
